# EUROPÄISCHE PATENTSCHRIFT

(11) **EP 3 022 111 B1**
(45) Veröffentlichungstag und Bekanntmachung des Hinweises auf die Patenterteilung: **06.09.2017**
(21) Anmeldenummer: 14733171.4
(22) Anmeldetag: 26.06.2014
(51) Int. Cl.: B62J 15/00, B62K 11/02, B62K 19/16

(54) **MULTIFUNKTIONALER MOTORRADHECKRAHMEN**
MULTIFUNCTIONAL REAR MOTORCYCLE FRAME
CADRE ARRIERE MULTIFONCTIONNEL POUR MOTO

(30) Priorität: 18.07.2013 DE 102013214109
(43) Veröffentlichungstag der Anmeldung: 25.05.2016
(73) Patentinhaber: Bayerische Motoren Werke Aktiengesellschaft, 80809 München (DE)
(72) Erfinder: HONEDER, Josef, A-4451 Garsten (AT); STREBL, Martin, A-5754 Hinterglemm (AT)
(86) Internationale Anmeldenummer: PCT/EP2014/063475
(87) Internationale Veröffentlichungsnummer: WO 2015/007488

(56) Entgegenhaltungen:
- EP-A2- 1 366 975
- WO-A1-2006/119459
- WO-A1-2013/029788
- DE-A1-102008 031 074
- FR-A1- 2 950 856

## Beschreibung

Die Erfindung betrifft einen Motorradheckrahmen gebildet aus zwei Hälften aus Kunststoff, die im Spritzgussverfahren hergestellt sind und miteinander verbunden im Querschnitt eine geschlossene Kastenform bilden. Insbesondere ist der erfindungsgemäße Motorradheckrahmen für den Einsatz bei Enduro-Motorrädern geeignet.

Aus dem Stand der Technik ist bekannt, Motorradheckrahmen aus Aluminium-Strangpressprofilen oder aus Stahl herzustellen, die als Träger oder Fachwerk ausgeführt sind. Auch ist bekannt, Motorradheckrahmen als Treibstoffbehälter mit struktureller Unterstützung durch Aluminium oder Stahl-Schweißkonstruktionen bereitzustellen, wobei der Treibstoffbehälter als ein im Rotationsverfahren hergestellter Hohlkörper gebildet ist.

Auch sind Ausführungen von Motorradheckrahmen bekannt, bei denen das bisher verwendete Aluminium bzw. die Aluminium-Stahl-Konstruktion im Fachwerk oder Träger durch Verwendung von Kunststoff ersetzt wird, jedoch bleibt die grundsätzliche Konstruktion identisch.

Die verwendeten Rahmen gemäß dem Stand der Technik haben sich zwar vielfach bewährt, bedürfen aber hoher Prozesslaufzeiten, hoher Werkzeugstandzeiten, hoher Materialkosten, hohem Werkzeuginvest und unterliegen einer limitierten Maßhaltigkeit, eingeschränkter Materialwahl, eingeschränkter Form- und Farbgebung sowie einer aufwendigen Montage mit vergleichsweise vielen Arbeitsschritten.

Bekannter Stand der Technik in diesem Bereich ist offenbart in den Druckschriften EP 1 366 975 A2, FR 2 950 856 A1 und WO 2006/119459 A1. FR 2 950 856 A1 offenbart die folgende Merkmale des Anspruchs 1; ein Motorradheckrahmen gebildet aus zwei Hälften aus Kunststoff, die im Spritzgussverfahren hergestellt sind und miteinander verbunden im Querschnitt eine geschlossene Kastenform bilden, wobei die geschlossene Kastenform zwei seitlich-vertikale und je eine obere und untere horizontale Verbindung aufweist, wobei der Motorradheckrahmen an den beiden Hälften abschnittsweise innenseitig eine Verrippung aufweist, die im Spritzgussverfahren mit angespritzt ist. Es ist vor diesem Hintergrund Aufgabe der Erfindung, einen Motorradheckrahmen bereitzustellen, der schneller und kostengünstiger fertigbar ist, wobei gleichzeitig die Steifigkeit gegenüber den Konstruktionen aus dem Stand der Technik erhalten oder sogar erhöht wird.

Diese Aufgabe wird gelöst durch den Motorradheckrahmen gemäß Patentanspruch 1.

Die Fertigung des Motorradheckrahmens aus Kunststoff im Spritzgussverfahren bietet den Vorteil einer erheblichen Materialeinsparung bei kürzeren Prozesslaufzeiten und hoher Maßhaltigkeit. Die Fertigung in zwei Hälften, die zusammengebaut im Querschnitt zumindest abschnittsweise eine geschlossene Kastenform bildet, ermöglicht eine hohe Steifigkeit des Motorradheckrahmens bei gleichzeitig vereinfachter Montage. Als geschlossene Kastenform ist hierbei jede Querschnittsausbildung zu verstehen, die zwei seitlich-vertikale und je eine obere und untere horizontale Verbindung aufweisen, so dass sich eine vollumfängliche Erstreckung ergibt.

Die verwendete Formulierung bezüglich der zwei "Hälften" beschränkt sich nicht auf eine identische gespiegelte Bauform, sondern drückt aus, dass die Bauteile im Wesentlichen mittig entlang der Fahrzeuglängsachse miteinander verbunden werden. Der im Patentanspruch 1 angesprochene "Querschnitt" betrifft einen Querschnitt in Fahrzeugrichtung.

Erfindungsgemäß ist vorgesehen, dass der Motorradheckrahmen an seinen beiden Hälften abschnittsweise innenseitig und im Bereich, der für einen Freigang des Hinterrads des Motorrads vorgesehen ist, außenseitig jeweils eine Verrippung aufweist, die im Spritzgussverfahren mit angespritzt ist. Die Verrippung versteift den Heckrahmen einerseits, andererseits werden zwischen den Rippen der Verrippung Zwischenräume bereitgestellt, in die in einer Ausführung der Erfindung Haltevorrichtungen zur Befestigung von Elektronikbauteilen angeordnet sind. Die durch die Rippen gebildeten Zwischenräume bieten zum einen Schutz vor äußeren Einflüssen, zum anderen eine ausreichende Belüftung zur Kühlung. Bei einer Anordnung von Elektronikbauteilen in den Zwischenräumen der außenseitigen Verrippung wird zum Schutz der Elektronikbauteile eine Außenabdeckung über dem Motorradheckrahmen verbaut.

Der erfindungsgemäße Motorradheckrahmen übernimmt die Karosseriefunktion, Strukturfunktion und eine Aufnahme- bzw. Haltefunktion für Elektrik, Elektronik, Steuereinheiten, Batterie, Tank und Luftfilter, wie nachstehend näher beschrieben. Durch die Verwendung des Spritzgusses können neben der Grundstruktur einer geschlossenen Kastenform die anfallende Bauteilanzahl reduziert werden, da sämtliche Halteeinrichtungen mit angespritzt werden.

Bevorzugte Materialien für den Kunststoff des Motorradheckrahmens sind Polyamid, Polyethylen oder Polypropylen sowie Acrylnitril-Butadien-Styrol. Auch sind Mischungen aus diesen Kunststoffen geeignet. Ferner ist günstig, dass der Kunststoff Glasfasern und/oder Kohlefasern aufweist, um ihn zu verstärken. Bevorzugt ist ein Gesamtfaseranteil von 5 - 65 %, weiter bevorzugt ein Gesamtfaseranteil von 15 - 45 %, noch weiter bevorzugt ein Gesamtfaseranteil von 20 - 35 %.

Besonders günstig ist, dass die zusammengefügten Hälften neben der Bereitstellung der geschlossenen Kastenform und somit der notwendigen Steifigkeit zusätzliche Funktionen erfüllen. Zum einen wird ein erster Aufnahmeraum bereitgestellt, der in seiner Form angepasst ist, einen Luftfilter aufzunehmen. Der erste Aufnahmeraum des Motorradheckrahmens macht mithin den üblicherweise als Extrabauteil bereitgestellten Luftfilterkasten obsolet. Der erste Aufnahmeraum ist hierzu in dem in Fahrtrichtung gesehen vorderen Bereich des Heckrahmens angeordnet, so dass über den Filter der Reinraum des Motorbereichs gegenüber der Schmutzseite im Bereich des Heckrades getrennt ist. In einer günstigen Ausführung ist in dem ersten Aufnahmeraum eine Halterung angeordnet, mittels derer der Luftfilter werkzeuglos an dem Motorradheckrahmen befestigbar ist. Die Halterung ist in einer bevorzugten Ausführungsform als Drahtspange ausgebildet, in die der Luftfilter einrastbar ist, so dass die Drahtspange eine Vorspannung auf den Luftfilter ausübt, um diesen am Motorradheckrahmen zu halten.

Im zusammengefügten Zustand können die beiden Hälften des Motorradheckrahmens in einer günstigen Ausführung einen zweiten Aufnahmeraum bilden, der in seiner Form angepasst ist, einen Kraftstofftank bzw. eine Kraftstofftankblase aufzunehmen. Der erste Aufnahmeraum und der zweite Aufnahmeraum können ohne Weiteres unmittelbar miteinander verbunden sein bzw. in einander übergehen. Der Motorradheckrahmen erfüllt somit die Funktion eines Trägers für einen Kraftstoffbehälter/Tank, der zusammen mit dem zugehörigen Pumpenelement durch eine oberseitig an dem Motorradheckrahmen bereitgestellte Öffnung eingebracht ist bzw. montiert ist.

An den Außenseiten des Motorradheckrahmens dient der in Fahrtrichtung gesehen vordere Teil als Designfläche und ist frei gestaltbar. Der hintere, den Freigang des Hinterrads abbildende Bereich des Motorradheckrahmens ist mit Abdeckungen versehen, um eine Verschmutzung der ebenfalls in diesem Bereich angeordneten Ansaugöffnungen für Verbrennungsluft zu schützen. Ferner sind Befestigungen für den Heckkotflügel, die Rückleuchte, den Kennzeichenträger und die Kennzeichenbefestigung in dem hinteren Bereich vorgesehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
Fig. 1 eine perspektivische Ansicht des Motorradheckrahmens aus Fahrtrichtung gesehen von vorne;
Fig. 2 eine Seitenansicht des Motorradheckrahmens aus Fig. 1;
Fig. 3 eine Draufsicht auf den Motorradheckrahmen aus Fig. 1;
Fig. 4 eine perspektivische Ansicht einer Hälfte des Motorradheckrahmens aus Fig. 1 von vorne sowie die Ansicht derselben von der Seite;
Fig. 5 eine seitliche Ansicht einer Hälfte des Motorradheckrahmens mit montierten Zusatzbauteilen.

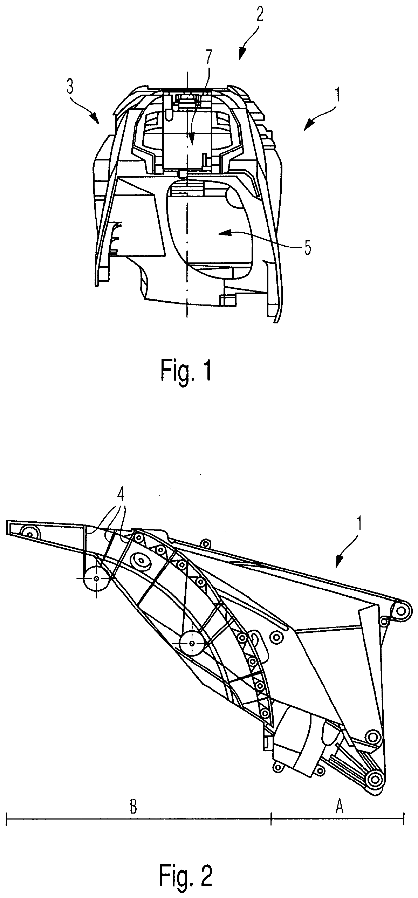

In Fig. 1 ist der Motorradheckrahmen 1 im zusammengebauten Zustand gebildet aus zwei Hälften 2, 3 in einer perspektivischen Ansicht aus Fahrtrichtung des Motorrads von vorne dargestellt und zeigt die geschlossenen Kastenform durch die Hälften 2, 3.

Die beiden Hälften 2, 3 des Motorradheckrahmens 1 sind im Spritzgussverfahren aus Kunststoff hergestellt und bilden in Fahrzeugrichtung gesehen die rechte und linke Hälfte. Die beiden Hälften 2, 3 sind miteinander verschraubt, wobei die Art der Verschraubung lastabhängig ist. Bei vergleichsweise niedriger Last kommen selbstschneidende Kunststoffschrauben, bei mittlerer Belastung Schrauben mit eingegossenen Inserts, und bei hoher Last herkömmliche Schrauben- und Mutter-Verbindungen zum Einsatz. Der Motorradheckrahmen 1 ist aus Polypropylen und/oder Polyethylen mit einem Glasfaser- und Kohlefaseranteil von insgesamt 20 % ausgebildet, wobei der Gesamtfaseranteil lastabhängig anpassbar ist. Vorzugsweise liegt der Gesamtfaseranteil im Kunststoff bei 20 - 35 %.

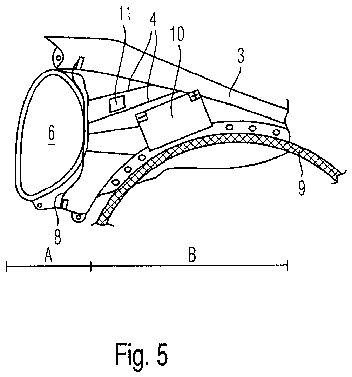

Die zusammengefügten Hälften 2, 3 bilden einen ersten Aufnahmeraum 5 und einen zweiten Aufnahmeraum 7. Der erste Aufnahmeraum 5 ist im Motorradheckrahmen 1 in Fahrzeugrichtung nach vorne ausgerichtet, und in seiner Form angepasst, einen in Fig. 5 dargestellten Luftfilter 6 aufzunehmen. Der zweite Aufnahmeraum 7 ist oberseitig zugänglich und bietet Platz für die Aufnahme eines Kraftstofftanks bzw. einer Tankblase.

In Fig. 2 ist der Motorradheckrahmen 1 aus Fig. 1 in der Seitenansicht gezeigt, wobei der in Fahrzeugrichtung gesehen hintere Bereich B den nötigen Freigang des Hinterrades 9 durch eine Anpassung der geschlossenen Kastenform dahingehend gewährleistet, dass für das Hinterrad eine im Wesentlichen der Radform entsprechende Rundung bereitgestellt ist. Der Motorradheckrahmen 1 weist eine Verrippung 4 auf, die sich in verschiedenen Richtungen über die Oberfläche des Rahmens erstreckt, wobei die Verrippung 4 im vorderen Bereich A innenseitig angeordnet ist und im hinteren Bereich B von innen nach außen gewendet wurde, um die zur Fertigung notwendigen Werkzeuge einfach zu gestalten und die Bauteilfestigkeit (Kraftumleitung) zu gewährleisten.

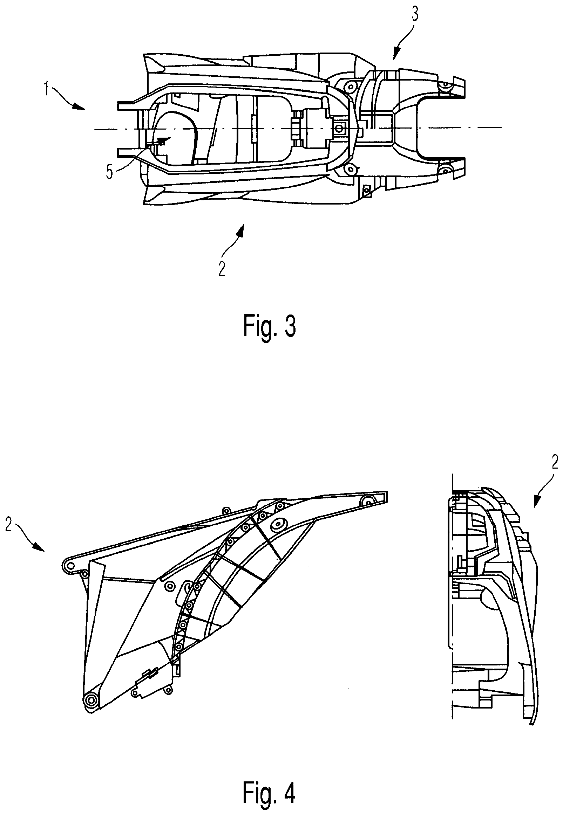

Die Fig. 3 und 4 zeigen die vorstehend beschriebenen Merkmale mit weiteren Details, insbesondere ist in Fig. 4 eine Hälfte 2 des Motorradheckrahmens 1 gezeigt, die zusammen mit der zweiten Hälfte 3 die geschlossene Kastenform bildet.

In Fig. 5 ist die Hälfte 3 des Motorradheckrahmens 1 mit Zusatzbauteilen dargestellt, wobei ein Hinterrad 9 in dem Freigang des hinteren Bereichs B dargestellt ist. Zwischen der Verrippung 4 sind Elektronikbauteile 11 geschützt angeordnet, ferner ist eine Batterie 10 dargestellt, die im hinteren Bereich des Motorradheckrahmens 1 befestigt gehalten ist. Im ersten Aufnahmeraum 5 ist ein Luftfilter 6 angeordnet, der über eine als Drahtspange 8 ausgebildete Halterung an dem Motorradheckrahmen 1 werkzeuglos befestigt ist. Der Bereich hinter dem Luftfilter 6, in Richtung der Batterie 10, kann zusätzlich der nicht explizit gekennzeichnete zweite Aufnahmeraum sein und mit einem Kraftstoffbehälter versehen werden, um das Innenvolumen des Motorradheckrahmens 1 bestmöglich auszunutzen. Der Motorradheckrahmen 1 dient ferner dazu, die Schmutzseite im Bereich des Hinterrads 9 von der Reinraumseite des Bereichs A, an den sich der Motor anschließt, zu trennen. In dem Bereich A können die Außenseite ferner als Designfläche dienen oder weitere Öffnungen aufweisen, um Verbrennungsluft definiert anzusaugen. Auf die Zusatzbauteile wie Heckkotflügel, Rückleuchte, Kennzeichenträger und Kennzeichenbefestigung ist der einfacheren Darstellung wegen verzichtet.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise kann die Verrippung in Abhängigkeit der Belastung vorgesehen werden, so dass auch Rahmenkonstruktionen mit nur innenseitiger oder nur außenseitiger Verrippung umfasst sind.

## Patentansprüche

1. Motorradheckrahmen gebildet aus zwei Hälften (2, 3) aus Kunststoff, die im Spritzgussverfahren hergestellt sind und miteinander verbunden im Querschnitt eine geschlossene Kastenform bilden, wobei die geschlossene Kastenform zwei seitlich-vertikale und je eine obere und untere horizontale Verbindung aufweist, wobei der Motorradheckrahmen an den beiden Hälften (2, 3) abschnittsweise innenseitig eine Verrippung und auch in einem Bereich (B), der für einen Freigang des Hinterrades (9) eines Motorrades vorgesehen ist, außenseitig eine Verrippung (4) aufweist, die beide im Spritzgussverfahren mit angespritzt sind.

2. Motorradheckrahmen nach Anspruch 1, **dadurch gekennzeichnet, dass** in mindestens einem Zwischenraum zwischen Rippen der Verrippung (4) eine Haltevorrichtungen zur Befestigung von Elektronikbauteilen angeordnet ist.

3. Motorradheckrahmen nach zumindest einem der vorigen Ansprüche, **dadurch gekennzeichnet, dass** der Kunststoff Glasfasern und/oder Kohlefasern aufweist.

4. Motorradheckrahmen nach zumindest dem vorigen Anspruch, **dadurch gekennzeichnet, dass** ein Gesamtfaseranteil im Kunststoff 15 - 45% beträgt.

5. Motorradheckrahmen nach zumindest einem der vorigen Ansprüche, **dadurch gekennzeichnet, dass** die Hälften (2, 3) im zusammengefügten Zustand einen ersten Aufnahmeraum (5) bereitstellen, der in seiner Form angepasst ist, einen Luftfilter (6) aufzunehmen.

6. Motorradheckrahmen nach zumindest einem der vorigen Ansprüche, **dadurch gekennzeichnet, dass** die Hälften (2, 3) im zusammengefügten Zustand einen zweiten Aufnahmeraum (7) bereitstellen, der in seiner Form angepasst ist, einen Tank aufzunehmen.

7. Motorradheckrahmen nach zumindest einem der vorigen Ansprüche 5 bis 6, **dadurch gekennzeichnet, dass** im ersten Aufnahmeraum (5) eine Halterung angeordnet ist, mittels derer der Luftfilter werkzeuglos befestigbar ist.

8. Motorradheckrahmen nach zumindest dem vorigen Anspruch, **dadurch gekennzeichnet, dass** die Halterung als Drahtspange (8) ausgebildet ist, in die der Luftfilter einrastbar ist.

9. Motorradheckrahmen nach zumindest einem der vorigen Ansprüche 5. bis 7 **dadurch gekennzeichnet, dass** zumindest eine Hälfte mindestens eine Öffnung aufweist, die in Strömungsverbindung mit dem ersten Aufnahmeraum steht.

## Claims

1. A rear motorcycle frame formed from two halves (2, 3) made of plastics material which are produced in an injection-moulding process and when connected together form a closed box shape in cross-section, the closed box shape having two lateral/vertical connections and one upper and one lower horizontal connection, wherein the rear motorcycle frame on the two halves (2, 3) has, in portions on the inside, a set of ribs, and also, in a region (B) which is intended for free travel of the rear wheel (9) of a motorcycle, on the outside a set of ribs (4), both of which sets are jointly moulded on in the injection-moulding process.

2. A rear motorcycle frame according to Claim 1, **characterised in that** a holding device for fastening electronic components is arranged in at least one gap between ribs of the set of ribs (4).

3. A rear motorcycle frame according to at least one of the preceding claims, **characterised in that** the plastics material contains glass fibres and/or carbon fibres.

4. A rear motorcycle frame according to at least the preceding claim, **characterised in that** a total fibre content in the plastics material amounts to 15 - 45%.

5. A rear motorcycle frame according to at least one of the preceding claims, **characterised in that** the halves (2, 3) in the joined-together state provide a first receiving space (5) which is adapted in its shape to receive an air filter (6).

6. A rear motorcycle frame according to at least one of the preceding claims, **characterised in that** the halves (2, 3) in the joined-together state provide a second receiving space (7) which is adapted in its form to receive a tank.

7. A rear motorcycle frame according to at least one of the preceding Claims 5 to 6, **characterised in that** a holding means is arranged in the first receiving space (5), by means of which the air filter can be fastened without tools.

8. A rear motorcycle frame according to at least the preceding claim, **characterised in that** the holding means is formed as a wire clasp (8) into which the air filter can be latched.

9. A rear motorcycle frame according to at least one of the preceding Claims 5 to 7, **characterised in that** at least one half has at least one opening which is in a flow connection with the first receiving space.

## Revendications

1. Cadre arrière de moto constitué de deux moitiés (2, 3) en matériau synthétique obtenues par un procédé d'injection et formant, en section, en étant assemblées, une forme de caisson fermé, la forme de caisson fermé comprenant deux jonctions latérales verticales et une jonction horizontale supérieure et une jonction horizontale inférieure, le cadre arrière de moto comprenant sur les deux moitiés (2, 3) par segments un nervurage sur sa face interne, et également un nervurage (4) sur sa face externe dans une zone (B) prévue pour libérer la roue arrière (9) de la moto, qui sont tous deux injectés par le procédé d'injection.

2. Cadre arrière de moto conforme à la revendication 1,
**caractérisé en ce que**
dans au moins un espace intermédiaire entre les rainures du rainurage (4) est installé un dispositif de retenue pour permettre la fixation de composants électroniques.

3. Cadre arrière de moto conforme à au moins l'une des revendications précédentes,
**caractérisé en ce que**
le matériau synthétique renferme des fibres de verre et/ou des fibres de carbone.

4. Cadre arrière de moto conforme à au moins l'une des revendications précédentes,
**caractérisé en ce que**
la proportion totale de fibres dans le matériau synthétique est égale à 15 à 45 %.

5. Cadre arrière de moto conforme à au moins l'une des revendications précédentes,
**caractérisé en ce que**
à l'état assemblé les moitiés (2, 3) définissent un premier espace de réception (5) dont la forme est adaptée à la réception d'un filtre à air (6).

6. Cadre arrière de moto conforme à au moins l'une des revendications précédentes,
**caractérisé en ce que**
à l'état assemblé, les deux moitiés (2, 3) définissent un second espace de réception (7) dont la forme est adaptée à la réception d'un réservoir.

7. Cadre arrière de moto conforme à au moins l'une des revendications précédentes 5 et 6,
**caractérisé en ce que**
le premier espace de réception (5) comporte une fixation au moyen de laquelle le filtre à air peut être fixé sans outil.

8. Cadre arrière de moto conforme à au moins l'une des revendications précédentes,
**caractérisé en ce que**
la fixation est réalisée sous la forme d'une agrafe en fil métallique (8) dans laquelle le filtre à air peut être encliqueté.

9. Cadre arrière de moto conforme à au moins l'une des revendications précédentes 5 à 7,
**caractérisé en ce qu'**
au moins une moitié comporte au moins une ouverture qui est en liaison fluidique avec le premier espace de réception.
